# EUROPÄISCHE PATENTSCHRIFT

(11) **EP 3 393 638 B1**
(45) Veröffentlichungstag und Bekanntmachung des Hinweises auf die Patenterteilung: **09.04.2025**
(21) Anmeldenummer: 16820288.5
(22) Anmeldetag: 23.12.2016
(51) Int. Cl.: B01D 69/08

(54) **FILTER MEMBRANE COMPRISING TWO ADSORBENTS**
FILTER MEMBRANE COMPRISING TWO ADSORBENTS
MEMBRANE DE FILTRE COMPRENANT DEUX ADSORBANTS

(30) Priorität: 23.12.2015 DE 102015122727
(43) Veröffentlichungstag der Anmeldung: 31.10.2018
(73) Patentinhaber: Pall Corporation, Port Washington, NY 11050 (US)
(72) Erfinder: OECHSLE, Dietmar, 73529 Schwäbisch Gmünd (DE)
(74) Vertreter: J A Kemp LLP
(86) Internationale Anmeldenummer: PCT/EP2016/082593
(87) Internationale Veröffentlichungsnummer: WO 2017/109194

(56) Entgegenhaltungen:
- EP-A1- 0 806 474
- EP-A1- 1 627 941
- EP-A1- 2 022 555
- WO-A1-2006/135966
- WO-A1-2008/097154
- WO-A1-99/60090

## Beschreibung

### Stand der Technik

Die Erfindung betrifft ein Verfahren zur Herstellung einer Filtervorrichtung nach dem Oberbegriff des Anspruchs 1, eine Filtervorrichtung nach dem Oberbegriff des Anspruchs 7 und ein Verfahren mit einer Filtervorrichtung nach Anspruch 2

Es ist bereits eine Filtervorrichtung bekannt, welche zu einer Stabilisierung einer Flüssigkeit, insbesondere von Getränken, vorgesehen ist, welche zumindest eine Filtereinheit, insbesondere eine Membranfiltereinheit, umfasst, welche zumindest ein Filterelement und zumindest ein integriertes Stabilisierungsmittel aufweist.

In der WO 99/60090 A1 wird vorgeschlagen, eine PVPP-haltige Aufschlämmung in einen Bier enthaltenden Tank zu geben, um das Bier zu klären. Danach wird das geklärte Bier in einen Filtertank überführt.

Für die Klärung von Getränken wird in der WO 2008/097154 A1 vorgeschlagen, eine Trennmatrix in Form von Perlen, einer Membran oder einem Filter mit PVPP auszurüsten. Gemäß der EP 2 022 555 A1 werden Hohlfasermembranen mit einem hydrophoben und einem hydrophilen Polymer hergestellt. Als hydrophiles Polymer kommt unter anderem PVP in Betracht, welches die Funktion eines Porenbildners übernimmt.

Weitere Hohlfasermembranen aus einem Polymermaterial sind aus der EP 1 627 941 A1 bekannt. Das Polymermaterial kann geringe Anteile an PVP enthalten.

Die WO 2006/135966 A1 schlägt vor, bei der Herstellung von porösen Polymer-Membranen eine Polymermischung zu verwenden, welche eine hydrophobe, nicht vernetzbare Komponente und eine vernetzbare Komponente umfasst. Als vernetzbare Komponente wird unter anderem PVP genannt.

In der EP 0 806 474 A1 wird ein Verfahren zur Bier-Stabilisierung beschrieben, bei dem unter anderem PVPP eingesetzt wird.

Die Aufgabe der Erfindung besteht insbesondere darin, eine gattungsgemäße Vorrichtung mit verbesserten Eigenschaften hinsichtlich einer Stabilisierung von Flüssigkeiten bereitzustellen.

### Vorteile der Erfindung

Die Erfindung betrifft ein Verfahren zur Herstellung einer Filtervorrichtung gemäß Anspruch 1 sowie eine nach diesem Verfahren erhältliche Filtervorrichtung gemäß Anspruch 10.

Die Erfindung betrifft gemäß dem letzteren Aspekt eine Filtervorrichtung, welche zu einer Stabilisierung einer Flüssigkeit, insbesondere von Getränken, vorgesehen ist, mit zumindest einer, insbesondere zumindest mehreren, Filtereinheit, insbesondere einer Membranfiltereinheit, welche zumindest ein Filterelement und zumindest ein integriertes Stabilisierungsmittel aufweist.

Es wird dabei vorgeschlagen, dass die Filtereinheit zumindest ein weiteres integriertes Stabilisierungsmittel aufweist. Durch die Verwendung mehrerer Stabilisierungsmittel können mehr und insbesondere verschiedene in der Flüssigkeit gelöste Stoffe, welche insbesondere bei Lagerung und/oder Transport Trübungen bilden, von dieser getrennt werden und insbesondere mehrere Stabilisierungsprinzipien genutzt werden, wodurch eine effizientere und reinere Stabilisierung erfolgt. Vorteilhaft befinden sich im Vergleich zu einer Filtervorrichtung ohne Stabilisierungsmittel bei einer Verwendung einer Filtervorrichtung mit zumindest einem Stabilisierungsmittel bis zu 3 % weniger trübungsaktive Stoffe in der Flüssigkeit. Weiter vorteilhaft befinden sich im Vergleich zu einer Filtervorrichtung ohne Stabilisierungsmittel bei Verwendung einer Filtervorrichtung mit zumindest einem Stabilisierungsmittel und zumindest einem weiteren Stabilisierungsmittel bis zu 6 % weniger trübungsaktive Stoffe in der Flüssigkeit. Ferner kann eine Lagerstabilität der Flüssigkeit verbessert werden. Im Vergleich zu einer Filtervorrichtung ohne Stabilisierungsmittel kann eine bis zu fünfmal längere Lagerstabilität erreicht werden, wobei erste Trübungen erst nach bis zu 6 Monaten Lagerung auftreten. Eine Kombination von Filtrierung und Stabilisierung ist insbesondere für die Brau- bzw. Getränkeindustrie von Interesse, da in nur eine Anlage investiert werden muss, wodurch Kosten reduziert werden können. Insgesamt kann also eine Stabilisierung der Flüssigkeit verbessert werden.

Unter einer "Filtervorrichtung" soll in diesem Zusammenhang insbesondere zumindest ein Teil, insbesondere eine Unterbaugruppe eines Filters, insbesondere eines Filtermoduls, eines Filtergeräts und/oder einer Filteranlage, verstanden werden. Vorzugsweise ist die Filtervorrichtung zu einer Stabilisierung von Getränken, wie beispielsweise Trinkwasser, Säften, Spirituosen, insbesondere Bier, Wein und/oder Whisky, vorgesehen. Ferner könnte die Filtervorrichtung alternativ oder zusätzlich zur Raffination, zur Abwasserbehandlung und/oder in der Medizintechnik, insbesondere zur Hämodialyse, verwendet werden. Insbesondere kann die Filtervorrichtung auch den gesamten Filter, insbesondere das gesamte Filtermodul, das gesamte Filtergerät und/oder die gesamte Filteranlage umfassen. Vorteilhaft kann die Filtervorrichtung, insbesondere zusätzlich, vorzugsweise zur Ausbildung des Filters, des Filtergeräts und/oder der Filteranlage, weitere Teile und Unterbaugruppen, insbesondere dieser, umfassen.

Unter "einer Stabilisierung einer Flüssigkeit" soll insbesondere verstanden werden, in einer Flüssigkeit gelöste, insbesondere organische und/oder trübungsaktive Stoffe, wie beispielsweise Gerbstoffe, Phenole, Proteine, Peptide und/oder andere Trübstoffe von der Flüssigkeit mittels Flüssigchromatographie, insbesondere unter Anwendung verschiedener mechanischer, chemischer und/oder physikalischer Separationsprinzipien, zu trennen.

Unter einer "Filtereinheit" soll insbesondere eine Einheit verstanden werden, welche dazu vorgesehen ist, eine Flüssigkeit mit einem darin gelösten Stoff aufzunehmen und den Stoff von der Flüssigkeit zumindest teilweise, insbesondere zumindest zu einem Großteil und besonders bevorzugt vollständig zu trennen, wobei die Filtereinheit vorteilhaft den getrennten Stoff aufnimmt und die Flüssigkeit passieren lässt. Die Filtereinheit ist insbesondere zu einer Mikrofiltration, bevorzugt zu einer Ultrafiltration und besonders bevorzugt zu einer Nanofiltration, vorgesehen. Die Filtereinheit weist insbesondere zumindest einen Flüssigkeitskanal zur Leitung der Flüssigkeit auf. Das Filterelement weist insbesondere eine für eine Flüssigkeit teildurchlässige, insbesondere poröse Struktur, auf, welche vorzugsweise zumindest teilweise eine Membran ausbildet. Vorzugsweise begrenzt das Filterelement den Flüssigkeitskanal in zumindest einer Richtung, insbesondere in einer Umfangsrichtung des Flüssigkeitskanals. Vorteilhaft ist die Filtereinheit als eine Hohlfaser ausgebildet, deren Mantel bevorzugt von dem Filterelement gebildet ist. Besonders bevorzugt bildet die Filtereinheit eine Cross-Flow-Filtrationseinheit aus, bei welcher insbesondere der Flüssigkeitskanal längs zu dem Filterelement verläuft, wobei insbesondere in einem Betriebszustand eine in dem Flüssigkeitskanal laufende Flüssigkeit quer zum Flüssigkeitskanal das Filterelement durchdringt.

Das Filterelement ist insbesondere lebensmittelecht, insbesondere erfüllen Bestandteile des Filterelements, vorzugsweise Präkursoren des Filterelements und/oder die von diesen Präkursoren ausgebildeten Bestandteile, die Leitlinie des Umweltbundesamtes zur hygienischen Beurteilung von organischen Materialien im Kontakt mit Trinkwasser (KTW) und/oder die Richtlinie zum Kontakt mit Lebensmitteln der U.S. Food and Drug Administration (FDA).

Das Filterelement weist insbesondere Poren mit einer mittleren Porengröße von wenigstens 0,004 µm, vorzugsweise von wenigstens 0,01 µm und besonders bevorzugt 0,1 µm und/oder insbesondere von höchstens 10 µm, vorzugsweise von höchstens 5 µm und besonders bevorzugt von höchstens 2 µm auf. Das Filterelement kann insbesondere asymmetrisch ausgebildet sein und zwar, vorzugsweise entlang einer Wanddicke, einen Porengradienten aufweisen. Vorzugsweise kann das Filterelement eine Trägerstruktur, welche dazu vorgesehen ist, zumindest ein Eigengewicht des Filterelements zu tragen, und insbesondere eine Trennstruktur, welche zumindest zur Filtrierung und/oder Stabilisierung der Flüssigkeit vorgesehen ist, aufweisen.

Unter einem "integrierten Stabilisierungsmittel" soll insbesondere ein Stabilisierungsmittel verstanden werden, welches zumindest teilweise einstückig mit der Filtereinheit ausgebildet ist und zwar insbesondere einstückig mit dem Filterelement verbunden ist und/oder dieses zumindest teilweise ausbildet.

Unter "zumindest teilweise einstückig" soll in diesem Zusammenhang insbesondere verstanden werden, dass zumindest ein Bauteil zumindest eines Objekts, insbesondere das Objekt selbst, einstückig mit zumindest einem Bauteil zumindest eines weiteren Objekts, insbesondere dem weiteren Objekt selbst, einstückig ausgebildet ist. Unter "einstückig" soll in diesem Zusammenhang insbesondere zumindest stoffschlüssig verbunden verstanden werden, beispielsweise durch einen Schweißprozess, einen Klebeprozess, einen Anspritzprozess, und/oder einen anderen, dem Fachmann als sinnvoll erscheinenden Prozess. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, bevorzugt in einem Spritzgussverfahren, insbesondere einem Ein- und/oder Mehrkomponenten-Spritzgussverfahren, und besonders bevorzugt in einem Spinnverfahren, insbesondere einem Nassspinnverfahren, wie beispielsweise Reaktivspinnen, bei welchem insbesondere in einem Phaseninversionsprozess die Filtereinheit mit integrierten Stabilisierungsmitteln hergestellt wird, hergestellt.

Unter "einem Stabilisierungsmittel" soll insbesondere ein Stoff verstanden werden, welcher dazu vorgesehen ist, vorteilhaft selektiv zumindest einen in der Flüssigkeit gelösten Stoff durch zumindest ein vorzugsweise chemisches Separationsprinzip, bevorzugt durch einen Ionenaustausch und/oder durch eine Adsorption, von der Flüssigkeit zu trennen und insbesondere aufzunehmen.

Das Stabilisierungsmittel und das weitere Stabilisierungsmittel sind insbesondere voneinander verschieden und unterscheiden sich voneinander insbesondere zumindest teilweise durch ein Separationsprinzip und/oder einen Stoff, insbesondere einen Präkursor, der das jeweilige Stabilisierungsmittel ausbildet.

In einem weiteren Aspekt der Erfindung wird vorgeschlagen, dass die Filtervorrichtung zumindest einen ersten Präkursor umfasst, welcher dazu vorgesehen ist, zumindest teilweise das Filterelement auszuformen, und derselbe erste Präkursor dazu vorgesehen ist, zumindest teilweise das Stabilisierungsmittel auszubilden. Hierdurch kann eine effiziente Integrierung des Stabilisierungsmittels erfolgen, da das Material, welches insbesondere bei einer Herstellung zumindest teilweise das Filterelement ausformt, genutzt wird um das Stabilisierungsmittel auszubilden. Ferner können Herstellungskosten und insbesondere Materialkosten verringert werden. Insbesondere kann das Stabilisierungsmittel besonders homogen in dem Filterelement, insbesondere in einer Schicht des Filterelements und besonders bevorzugt an einer Oberfläche des Filterelements, verteilt werden, wodurch eine gleichmäßige oder gezielte Wirksamkeit erreicht werden kann. Unter "einem Präkursor" soll insbesondere ein Ausgangsstoff verstanden werden, welcher dazu vorgesehen ist, insbesondere mit sich selbst und/oder mit einem weiteren Stoff, vorzugsweise einem weiteren Präkursor, ein Endprodukt, wie beispielsweise einen Stoff, ein Element oder eine Einheit, vorzugsweise durch Polymerisation, insbesondere Quervernetzen, auszubilden. Bezeichnungen, wie beispielsweise erstes, zweites oder drittes Element, Stoff, Präkursor, und/oder Einheit dienen insbesondere lediglich der Identifikation und/oder Unterscheidung und sollen vorzugsweise keine Reihenfolge, insbesondere bei einer Herstellung, vorgeben. Insbesondere soll unter "demselben Präkursor" eine insbesondere eine selbe, insbesondere in einem einzigen Verfahrensschritt, einmalig hinzugefügte Stoffmenge des Präkursors, verstanden werden. Darunter, dass "ein Präkursor zumindest teilweise das Filterelement ausformt" soll insbesondere verstanden werden, dass der Präkursor, insbesondere bei einer Herstellung der Filtereinheit, zumindest teilweise eine Form, eine Haptik, eine Struktur, insbesondere eine Porosität des Filterelements und/oder eine Membran des Filterelements beeinflusst und/oder zumindest teilweise ausbildet. Vorzugsweise ist derselbe erste Präkursor ein Porenbildner des Filterelements. Ferner ist derselbe erste Präkursor insbesondere dazu vorgesehen, zumindest teilweise das Filterelement auszubilden, wobei derselbe erste Präkursor vorzugsweise mit sich selbst und/oder mit zumindest einem weiteren Präkursor, zumindest teilweise ausbildet, polymerisiert, insbesondere quervernetzt. Unter "quervernetzten" soll insbesondere polymerisiert und zwar vorteilhaft mit zumindest einem, vorzugsweise zumindest mehreren, Knotenpunkt und/oder Kreuzungspunkt polymerisiert verstanden werden. Ferner ist insbesondere derselbe erste Präkursor dazu vorgesehen, das Filterelement zu funktionalisieren. Insbesondere wird ein nicht quervernetzte Präkursor, insbesondere eine restliche nicht quervernetzte Stoffmenge des Präkursors, bei einem Herstellungsverfahren, insbesondere bei einer Nachbehandlung, oxidativ gespalten und mit Wasser ausgespült.

Die Quervernetzung kann insbesondere zumindest teilweise über einen heterozyklischen Teil des ersten Präkursors und/oder einen aliphatischen Kettenteil des ersten Präkursors erfolgen. Insbesondere kann der erste Präkursor zumindest teilweise die Trennstruktur, insbesondere durch die Quervernetzung, ausbilden, wobei vorzugsweise die Trägerstruktur, insbesondere durch einen Auswaschprozess, im Wesentlichen frei von dem ersten Präkursor ist.

Ferner wird vorgeschlagen, dass das Stabilisierungsmittel dazu vorgesehen ist, einen Stoff, vorzugsweise zumindest einen Gerbstoff und/oder ein Phenol, welcher in der Flüssigkeit gelöst ist, aufzunehmen und das weitere Stabilisierungsmittel dazu vorgesehen ist, einen weiteren Stoff, bevorzugt ein Protein und/oder ein Peptid, welcher in der Flüssigkeit gelöst ist und welcher von dem Stoff verschieden ist, aufzunehmen. Hierdurch kann eine Stabilisierung der Flüssigkeit weiter verbessert werden, da unterschiedliche Stoffe gezielt und selektiv mittels der verschiedenen Stabilisierungsmittel von der Flüssigkeit getrennt werden können.

Es ist denkbar, dass die Filtervorrichtung zu einer Einmalverwendung vorgesehen ist, wobei ein Stabilisierungsmittel der Filtereinheit nicht regenerierbar ist, jedoch verringert sich dadurch eine Standzeit der Filtervorrichtung. Um eine Standzeit der Filtervorrichtung, insbesondere durch Mehrfachverwendung, zu verlängern und insbesondere Materialkosten einzusparen wird vorzugsweise vorgeschlagen, dass die Filtereinheit, zumindest ein, insbesondere zumindest mehrere, vorzugsweise zumindest zwei und besonders bevorzugt genau zwei, chemisch regenerierbare Stabilisierungsmittel, insbesondere das bereits erwähnte Stabilisierungsmittel und/oder das bereits erwähnte weitere Stabilisierungsmittel, aufweist. Unter "chemisch regenerierbar" soll insbesondere verstanden werden, dass die Filtereinheit durch eine chemische Reaktion regeneriert werden kann. Insbesondere ist das Stabilisierungsmittel, insbesondere das bereits erwähnte Stabilisierungsmittel, mittels einer Säure und/oder einer Lauge, vorzugsweise einer Natronlauge, chemisch regenerierbar. Ferner ist das Stabilisierungsmittel, insbesondere das bereits erwähnte weitere Stabilisierungsmittel mittels einer Salzlösung, vorzugsweise einer Natriumchlorid-Lösung, chemisch regenerierbar.

Es wird weiterhin vorgeschlagen, dass die Filtereinheit zumindest ein Stabilisierungsmittel, insbesondere das bereits erwähnte Stabilisierungsmittel, aufweist, das ein Adsorptionsmittel ist. Hierdurch kann ein in Flüssigkeit gelöster Stoff auf einfache Art und Weise von dieser getrennt werden. Insbesondere lagert sich der Stoff in der Filtereinheit an der Grenzfläche zwischen fester und flüssiger Phase ab, wo dieser besonders vorteilhaft zur Regenerierung des Stabilisators entfernt werden kann. Unter "einem Adsorptionsmittel" soll insbesondere ein Stabilisierungsmittel verstanden werden, welches vorzugsweise als Separationsprinzip, Van-der-Waals-Wechselwirkungen nutzt und insbesondere dazu vorgesehen ist, einen in der Flüssigkeit gelösten Stoff zu adsorbieren.

Es wird außerdem vorgeschlagen, dass die Filtereinheit zumindest ein Stabilisierungsmittel, insbesondere das bereits erwähnte weitere Stabilisierungsmittel, aufweist, das ein Ionentauscher ist. Hierdurch kann ein in Flüssigkeit gelöster Stoff auf besonders einfache Art und Weise von dieser getrennt werden. Unter "einem Ionentauscher" soll insbesondere ein Stabilisierungsmittel verstanden werden, welches vorzugsweise als Separationsprinzip, Coulomb-Wechselwirkungen nutzt und insbesondere dazu vorgesehen ist, Ionen mit einem in der Flüssigkeit gelösten Stoff, insbesondere den Soff selbst, auszutauschen. Vorteilhaft kann der Ionentauscher als ein Kationentauscher und/oder Anionentauscher ausgebildet sein.

Es wird ferner vorgeschlagen, dass derselbe erste Präkursor, dazu vorgesehen ist, das Filterelement hydrophil zu funktionalisieren. Hierdurch kann eine Durchdringung des Filterelements mit der Flüssigkeit quer zur Fließrichtung verbessert werden. Es kann ein optimaler Stoffaustausch bei der Filtration gewährleistet werden. Insbesondere kann ein Retentatkreislauf verbessert werden.

Erfindungsgemäß umfasst der erste Präkursor zumindest Polyvinylpyrrolidon (PVP). Ferner kann der erste Präkursor insbesondere Porenbildner, und zwar vorzugsweise hydrophile Porenbildner, wie beispielsweise Polyvinylacetat, Polyvinylpyrrolidon, Polyethylenglycol, Copolymere von Vinylpyrrolidon, Polyvinylakohol, Polyethylenglycol, Polyethylenglycolester und/oder Benzophenonacrylat, umfassen. Hierdurch kann eine Umwelt- und/oder Gesundheitsverträglichkeit weiter verbessert werden.

Es wird weiter vorgeschlagen, dass die Filtervorrichtung optional einen zweiten Präkursor umfasst, welcher dazu vorgesehen ist, zumindest teilweise ein Stabilisierungsmittel, insbesondere das bereits erwähnte Stabilisierungsmittel auszubilden. Hierdurch können verschiedene Eigenschaften des Stabilisierungsmittels, insbesondere abhängig von einem Konzentrationsverhältnis des ersten Präkursors und des zweiten Präkursors eingestellt werden. Insbesondere ist der zweite Präkursor von dem ersten Präkursor verschieden. Vorzugsweise beträgt ein Verhältnis, insbesondere ein Gewichts- und/oder Volumenverhältnis, des ersten Präkursors und des zweiten Präkursors zwischen 80 % zu 20 % und 55 % zu 45 %, vorzugsweise zwischen 70 % zu 30 % und 60% zu 40%. Besonders bevorzugt beträgt das Verhältnis 65 % zu 35 %.

Darüber hinaus wird vorgeschlagen, dass der zweite Präkursor zumindest Vinylacetat (VA) umfasst. Hierdurch können vorteilhaft eine Festigkeit, eine Ladung und insbesondere ein Adsorptionsverhalten des Stabilisierungsmittels besonders vorteilhaft eingestellt werden. Vorzugsweise bildet der zweite Präkursor zumindest teilweise das Filterelement aus. Insbesondere ist der zweite Präkursor in einem Betriebszustand der Filtervorrichtung mit dem ersten Präkursor quervernetzt. Insbesondere kann zur Einstellung gewünschter Eigenschaften des Stabilisierungsmittels ein Mischungsverhältnis beider Präkursoren, vorzugsweise des ersten und des zweiten Präkursors, angepasst werden.

Die erfindungsgemäße Filtervorrichtung weist einen dritten Präkursor auf, welcher Polysulfon (PS), Polyethersulfon (PES) und/oder Polyvinylidenfluorid (PVDF) umfasst, und welcher dazu vorgesehen ist, die Filtereinheit zumindest teilweise auszubilden.

Ferner kann der dritte Präkursor Polyetherimid, Polyimid, Polyamid, Polyamidimid, Polyether, Polyetherketon und/oder Polyetheretherketon umfassen. Insbesondere kann der zweite Präkursor und/oder der dritte Präkursor dazu vorgesehen sein, zumindest teilweise, insbesondere zumindest zu einem Großteil, die Trägerstruktur des Filterelements auszubilden. Insbesondere ist der zweite Präkursor und/oder der dritte Präkursor dazu vorgesehen, mit dem ersten Präkursor hydrophil vernetzt zu werden, insbesondere durch eine kovalente und/oder ionische Vernetzung, insbesondere Quervernetzung, mit diesem. Insbesondere kann bei einer Herstellung der Filtervorrichtung der erste Präkursor, der zweite Präkursor und/oder der dritte Präkursor Bestandteil einer Lumenflüssigkeit und/oder einer Polymerlösung sein.

Hierdurch kann eine Gesundheitsverträglichkeit weiter verbessert werden.

In einer bevorzugten Ausgestaltung der Erfindung wird vorgeschlagen, dass die Filtereinheit zumindest ein Stabilisierungsmittel, insbesondere das bereits erwähnte Stabilisierungsmittel, aufweist, welches von zumindest einem quervernetzten Präkursor, insbesondere demselben ersten Präkursor, zumindest teilweise ausgebildet ist. Hierdurch kann das Stabilisierungsmittel besonders kostengünstig ausgebildet werden. Insbesondere kann dadurch ein oxidationsbeständiges und laugenunlösliches Stabilisierungsmittel ausgebildet werden. Insbesondere bildet der erste Präkursor mit dem zweiten Präkursor quervernetzt zumindest teilweise, vorzugsweise vollständig, das Stabilisierungsmittel aus.

Insbesondere kann zur Unterstützung einer Quervernetzung die Filtervorrichtung weitere Präkursoren umfassen, wie beispielsweise insbesondere hydrophobe Porenbildner, vorzugsweise Block-Copolymere mit hydrophobem Anteil und hydrophilem Anteil, Copolymere von Vinylpyrrolidon mit Vinylacetat (PVP/VA), Polyethylenglycol-co-Propylenglycol, insbesondere bekannt unter dem Markennamen (Poloxamer 477), Copolymere mit Acrylat- und Acrylamidgruppen. Ferner sind weitere Präkursoren, insbesondere vernetzbare, insbesondere ohne Lichtbestrahlung vernetzbare, hydrophile Polymere, bzw. Oligomere, wie beispielsweise Benzophenonmethacrylat oder Polyvinylalkohol (PVA) denkbar.

In einer besonders bevorzugten Ausgestaltung der Erfindung wird vorgeschlagen, dass die Filtereinheit zumindest ein, insbesondere zumindest mehrere, vorzugsweise zumindest zwei und besonders bevorzugt genau zwei, als Adsorptionsmittel ausgebildete Stabilisierungsmittel, insbesondere das bereits erwähnte Stabilisierungsmittel und/oder das bereits erwähnte weitere Stabilisierungsmittel aufweist, welches zumindest ein quervernetztes Polyvinylpyrrolidon (PVPP), ein Xerogel, ein Kieselgel, ein Zeolith, ein Bentonit und/oder ein Gemisch dieser Art umfasst. Hierdurch kann eine Stabilisation weiter verbessert werden.

Die Filtereinheit kann insbesondere ein als Ionentauscher ausgebildetes Stabilisierungsmittel, insbesondere das bereits erwähnte weitere Stabilisierungsmittel, aufweisen, welches zumindest ein funktionalisiertes hydrophiles Polymer, ein funktionalisiertes Kieselgel, eine funktionalisierte Zellulose, ein funktionalisiertes Dextran umfasst. Die Funktion des Stabilisierungsmittels als Anionen- und/oder Kationentauscher ist insbesondere abhängig von der Funktionalisierung. Insbesondere zur Funktionalisierung des Stabilisierungsmittels als einen Anionentauscher können insbesondere Ammoniumgruppen, insbesondere quarternäre Ammoniumgruppen, Diethylaminoethyl (DEAE), Trimethylhydroxypropyl (QA), quarternäres Aminoethyl (QAE), quarternäres Aminomethyl (Q), Triethylaminomethyl (TEAE), Triethylaminopropyl (TEAP) und Polyethylenimin (PEI) verwendet werden. Insbesondere zur Funktionalisierung des Stabilisierungsmittels als einen Kationentauscher können Carboxylgruppen, Sulfatgruppen, insbesondere Sulfonat (S), Sulfoethyl (SE), Sulfopropyl (SP), Phosphatgruppen, insbesondere Orthophospat (P), Metharylat und/oder Carboxymethyl (CM) verwendet werden. Um eine Umwelt- und/oder Gesundheitsverträglichkeit weiter zu verbessern wird vorgeschlagen, dass die Filtereinheit ein als Ionentauscher ausgebildetes Stabilisierungsmittel aufweist, welches zumindest eine funktionalisierte Agarose umfasst. Insbesondere ist die Agarose als eine quervernetzte Agarose und zwar insbesondere als Sepharose, vorzugsweise Sepharosekügelchen, insbesondere auch bekannt als Sepharose-beads, ausgebildet. Besonders bevorzugt ist die Agarose mittels einer Ammoniumgruppe, vorzugsweise einer quaternären Ammoniumgruppe und besonders bevorzugt Diethylaminoethyl (DEAE) funktionalisiert. Das weitere Stabilisierungsmittel ist vorzugsweise als ein Anionentauscher ausgebildet.

Ferner geht die Erfindung aus von einem Verfahren, zur Herstellung einer Filtervorrichtung, welche zu einer Stabilisierung einer Flüssigkeit, insbesondere von Getränken, vorgesehen ist, und mit einer Filtereinheit, wobei zumindest teilweise ein Filterelement der Filtereinheit zumindest von einem ersten Präkursor ausgeformt wird.

Es wird vorgeschlagen, dass ein integriertes Stabilisierungsmittel der Filtereinheit zumindest teilweise von demselben ersten Präkursor ausbildet wird. Hierdurch kann eine Stabilisierung von Flüssigkeiten verbessert werden. Ferner kann eine effiziente Integrierung des Stabilisierungsmittels erfolgen und Herstellungskosten und insbesondere Materialkosten verringert werden. Insbesondere wird der erste Präkursor in einem Verfahrensschritt, vorzugsweise eine Stoffmenge des Präkursors, vorzugsweise zusammen mit weiteren Stoffen, weiteren Präkursoren, welche insbesondere zur Ausbildung der Filtereinheit vorgesehen sind, in einem Lösungsmittel gelöst.

Das Lösungsmittel kann insbesondere N-Methylpyrrolidon (NMP), Dimethylsulfoxid, Chloroform, Methylenchlorid, Dimethylformamid und/oder Dimethylacetamid umfassen.

Es wird ferner vorgeschlagen, dass die Filtereinheit zumindest teilweise von einem weiteren Stabilisierungsmittel und/oder zumindest ein vierter Präkursor, insbesondere des weiteren Stabilierungsmittels, ausgebildet wird. Hierdurch kann auf einfache Art eine Filtereinheit mit mehreren Stabilisierungsmitteln ausgebildet werden.

Insbesondere wird die Filtereinheit mittels Phaseninversion die Filtereinheit mittels des ersten Präkursors ausgeformt und insbesondere mittels des weiteren Stoffs, insbesondere eines weiteren Präkursors ausgebildet. Des Weiteren wird ein Aktivator vorgeschlagen, durch welchen eine Ausbildung zumindest eines Stabilisierungsmittels zumindest durch denselben ersten Präkursor initiiert wird. Hierdurch kann eine gezielte Ausbildung des Stabilisationsmittels erfolgen. Unter "einem Aktivator" soll insbesondere ein Stoff verstanden werden, welcher dazu vorgesehen ist, vorzugsweise durch Bestrahlung mit Licht, insbesondere UV-Licht, vernetzend mit zumindest einem Stoff, insbesondere demselben ersten Präkursor zu reagieren. Bei dem Aktivator kann es sich insbesondere um einen Radikalstarter, wie beispielsweise Peroxid, tert-Butylperoxypivalat und/oder H₂O₂/CuCl₂ handeln. Ferner kann der Aktivator insbesondere ein Photoaktivator sein, wie beispielsweise 4,4,'-Diazidostilben-2,2'-Dinatriumsulfonat.

Ferner kann der Photoaktivator 2,4-Diethyl-9H-thioxanthen-9-on und/oder Phenylbis(2,3,6-trimethylbenzoyl)phosphinoxid sein.

Insbesondere kann bei einer Herstellung der Filtervorrichtung die Bestrahlung mit Licht innerhalb und/oder unmittelbar nach einer Spinndüse erfolgen, wie beispielsweise mittels eines in der Spinndüse angeordneten Lichtleiters. Vorteilhaft kann eine gezielte Bestrahlung einer Innenfläche des Filterelements, insbesondere der Trennstruktur, erfolgen. Ferner kann bei einer Herstellung des Filterelements zumindest ein Herstellparameter, insbesondere mehrere Herstellparameter, wie beispielsweise eine Temperatur, ein pH-Wert, eine Konzentration des Aktivators, insbesondere des Radikalstarters und/oder des Photoaktivators, sowie eine Intensität und/oder Wellenlänge einer Lichtbestrahlung variiert und insbesondere mittels einer Steuer- und/oder Regeleinheit gesteuert werden. Insbesondere kann eine Temperatur bei einer Herstellung wenigstens 20° C, vorzugsweise wenigstens 50°C und besonders bevorzugt wenigstens 70° C und/oder höchstens 130° C, vorzugsweise höchstens 100° C und besonders bevorzugt höchstens 90° C betragen.

Insbesondere um das Filterelement vor Radikalen und/oder Lichtstrahlung zu schützen, kann dieses mit einer Reflexions- und/oder Absorptionsschicht versehen werden, beispielsweise mittels lichtabsorbierender Stoffe, wie Ruß und/oder Radikalfänger, beispielsweise mittels Dialkyldithiocarbamaten. Alternativ oder zusätzlich zu einer Bestrahlung mit Licht ist auch eine Bestrahlung mit ionisierender Strahlung denkbar.

Ferner wird vorgeschlagen, dass das Stabilisierungsmittel durch Reaktivspinnen ausgebildet wird, wobei derselbe erste Präkursor radikal polymerisiert wird.

Weiterhin geht die Erfindung aus von einem Verfahren mit einer Filtervorrichtung, welche zu einer Stabilisierung einer Flüssigkeit, insbesondere von Getränken, vorgesehen ist, mit einer Filtereinheit, wobei die Filtereinheit in einem Verfahrensschritt eine Flüssigkeit mittels zumindest eines integrierten Stabilisierungsmittels der Filtereinheit stabilisiert und in einem weiteren Verfahrensschritt das integrierte Stabilisierungsmittel regeneriert wird. Hierdurch kann ein kontinuierlicher Betrieb mit regenerierbarem Stabilisierungsmittel erreicht werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Filtermodul mit einer Filtervorrichtung mit mehreren Filtereinheiten in einer Explosionsdarstellung,
- Fig. 2: eine der Filtereinheiten in einer Schnittansicht,
- Fig. 3: schematischer Verfahrensablauf zur Herstellung der Filtereinheit,
- Fig. 4: Vorrichtung zur Herstellung der Filtervorrichtung,
- Fig. 5: Vorrichtung zur Herstellung der Filtervorrichtung mit einer Spinndüse und
- Fig. 6: schematischer Verfahrensablauf zur Regenerierung von Stabilisierungsmitteln.

### Beschreibung des Ausführungsbeispiels

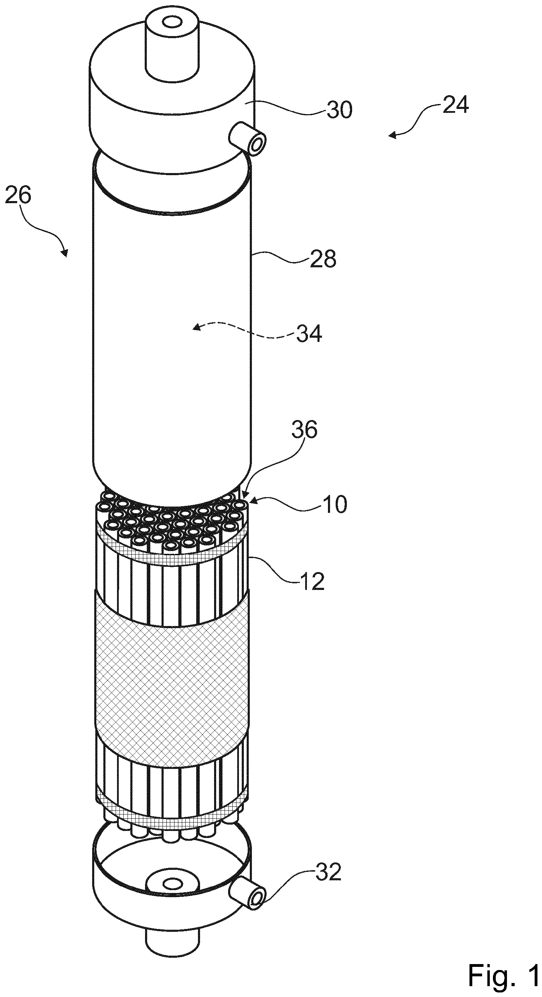

Figur 1 zeigt ein Filtermodul 24 mit einer Filtervorrichtung. Die Filtervorrichtung ist zu einer Stabilisierung von einer Flüssigkeit vorgesehen. Im vorliegenden Fall ist die Filtervorrichtung zur Stabilisierung von Getränken, wie beispielsweise Trinkwasser, Säften, Spirituosen, insbesondere Bier, Wein und/oder Whisky, vorgesehen. Die Filtervorrichtung kann jedoch auch zur Stabilisierung anderer Flüssigkeiten verwendet werden. Die Filtervorrichtung stabilisiert die Flüssigkeiten, indem sie in zumindest einem Betriebszustand in der Flüssigkeit gelöste organische Stoffe, wie beispielsweise Gerbstoffe, Phenole, Proteine und/oder Peptide und/oder andere Trübstoffe von der Flüssigkeit trennt.

Die Filtervorrichtung weist ein Gehäuse 26 auf. Das Gehäuse 26 weist einen Gehäusegrundkörper 28 auf. Ferner weist das Gehäuse 26 zwei Endkappen 30, 32 auf. Die Endkappen 30, 32 verschließen den Gehäusegrundkörper 28 flüssigkeitsdicht. Eine erste Endkappe 30 weist einen Flüssigkeitszulauf auf. Eine zweite Endkappe 32 weist einen Flüssigkeitsablauf auf. Der Gehäusegrundkörper 28 bildet einen Zylindermantel aus. Der Gehäusegrundkörper 28 begrenzt einen Hohlraum 34. Die Endkappen weisen jeweils zwei Anschlüsse auf. Je ein Anschluss dient zum Verbinden mit einem Flüssigkeitskreislauf der zu stabilisierenden Flüssigkeit. Je ein weiterer Anschluss dient zur Abgabe der stabilisierten Flüssigkeit.

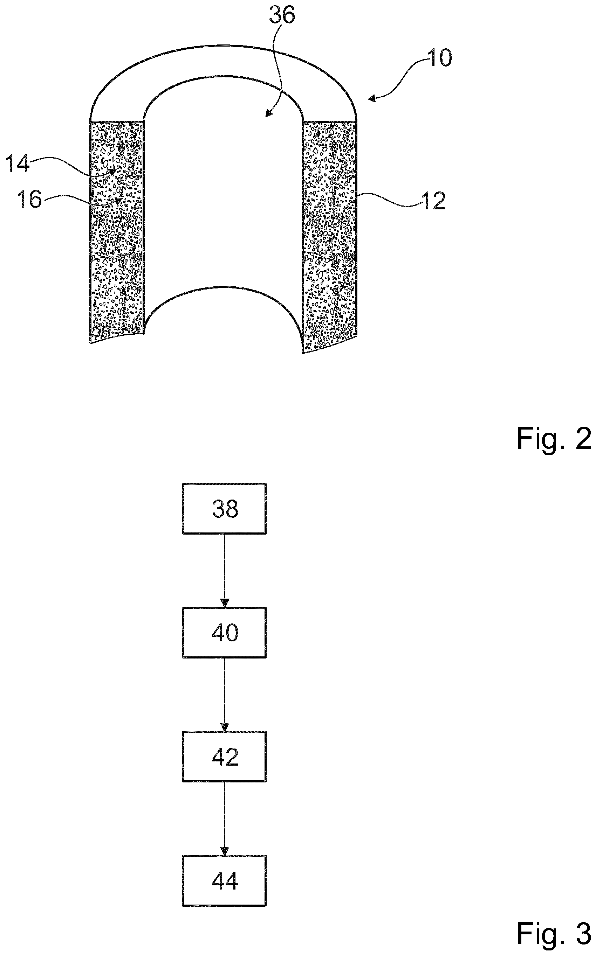

Die Filtervorrichtung weist zumindest eine Filtereinheit 10 auf (vgl. Figur 2). Im vorliegenden Fall weist die Filtervorrichtung mehrere Filtereinheiten 10 auf. Die Filtereinheiten 10 sind in dem Hohlraum 34 angeordnet. Zur besseren Übersichtlichkeit ist sind parallel zueinander angeordnet und gebündelt. Die Filtereinheiten 10 sind in Endbereichen, welche zumindest teilweise in einem montierten Zustand in der Endkappe angeordnet sind, mit einer Dichtung versehen. Die Dichtung dichtet in einem montierten Zustand einen Zwischenraum zwischen Endkappe und den Filtereinheiten ab. Hierdurch wird ein Durchmischen einer zu stabilisierenden Flüssigkeit mit einer bereits stabilisierten Flüssigkeit vermieden. Die Dichtung wird von einem Harz, insbesondere einem Pottingharz, ausgebildet. Die Filtereinheiten 10 sind, insbesondere bis auf Herstellungs- und/oder Montagetoleranzen, zumindest im Wesentlichen äquivalent zueinander ausgebildet. Deshalb wird im Folgenden nur eine Filtereinheit 10 näher beschrieben. Im vorliegenden Fall ist die Filtereinheit 10 als eine Membranfiltereinheit ausgebildet. Die Filtereinheit 10 weist einen Flüssigkeitskanal 36 zur Leitung der Flüssigkeit auf.

Die Filtereinheit 10 weist ein Filterelement 12 auf. Das Filterelement 12 bildet eine Membran aus. Das Filterelement 12 weist eine für die Flüssigkeit teildurchlässige poröse Struktur auf. Die poröse Struktur bildet zumindest teilweise die Membran aus. Das Filterelement 12 begrenzt den Flüssigkeitskanal 36 in zumindest einer Richtung. Das Filterelement 12 begrenzt den Flüssigkeitskanal 36 in einer Umfangrichtung des Flüssigkeitskanals 36.

Die Filtereinheit 10 ist als eine Hohlfaser ausgebildet. Die Filtereinheit 10 weist einen Mantel auf. Der Mantel ist von dem Filterelement 12 gebildet. Die Filtereinheit 10 ist als eine Cross-Flow-Filtrationseinheit ausgebildet. Der Flüssigkeitskanal 36 verläuft längs zu dem Filterelement 12. Eine in einem Betriebszustand in dem Flüssigkeitskanal 36 laufende Flüssigkeit durchdringt quer zum Flüssigkeitskanal 36 das Filterelement 12. Die Filtereinheit ist zumindest teilweise aus Polysulfon, Polyethersulfon oder Polyvinylidenfluorid ausgebildet.

Insbesondere kann die Filtereinheit 10 als eine Kapillarmembran ausgebildet sein. Die Filtereinheit kann insbesondere einen Außendurchmesser von höchstens 10 mm, vorzugsweise höchstens 5 mm und besonders bevorzugt von höchstens 3 mm und/oder von mindestens 0,1 mm, vorzugsweise von mindestens 0,3 mm und besonders bevorzugt von mindestens 0,5 mm aufweisen. Alternativ kann die Filtereinheit 10 als eine Flachmembran ausgebildet sein.

Die Filtervorrichtung weist einen ersten Präkursor 18 auf. Der erste Präkursor 18 umfasst zumindest Polyvinylpyrrolidon. Der erste Präkursor 18 ist im vorliegenden Fall Polyvinylpyrrolidon. Der erste Präkursor 18 ist dazu vorgesehen, zumindest teilweise das Filterelement 12 auszuformen. Derselbe erste Präkursor 18 ist ein Porenbildner des Filterelements 12. Ferner ist derselbe erste Präkursor 18 dazu vorgesehen, das Filterelement 12 zu funktionalisieren. Derselbe erste Präkursor 18 ist dazu vorgesehen, das Filterelement 12 hydrophil zu funktionalisieren. Ferner ist derselbe erste Präkursor 18 dazu vorgesehen, zumindest teilweise das Stabilisierungsmittel 14 auszubilden.

Ferner weist die Filtervorrichtung zumindest einen zweiten Präkursor 20 auf. Der zweite Präkursor 20 bildet zumindest teilweise das Filterelement 12 aus. Der zweite Präkursor 20 ist dazu vorgesehen, zumindest teilweise das Stabilisierungsmittel 14 auszubilden. Der zweite Präkursor 20 umfasst zumindest Vinylacetat. Im vorliegenden Fall ist der weitere Präkursor 20 Vinylacetat.

Der erste Präkursor 18 ist dazu vorgesehen, zu polymerisieren und insbesondere sich mit sich selbst und/oder mit zumindest dem zweiten Präkursor 20 quer zu vernetzen. Einem Verhältnis, insbesondere einem Gewichts- und/oder Volumenverhältnis, des ersten Präkursors 18 und des zweiten Präkursors 20 beträgt 65 % zu 35 %.

Ferner umfasst die Filtervorrichtung zumindest einen dritten Präkursor 21. Der dritte Präkursor 21 umfasst Polysulfon (PS), Polyethersulfon (PES) und/oder Polyvinylidenfluorid (PVDF). Im vorliegenden Fall ist der dritte Präkursor Polyethersulfon. Der dritte Präkursor 21 ist dazu vorgesehen, die Filtereinheit 12 zumindest teilweise auszubilden.

Ferner weist die Filtereinheit 10 zumindest ein integriertes Stabilisierungsmittel 14 auf. Das Stabilisierungsmittel 14 ist zumindest teilweise einstückig mit der Filtereinheit 10 ausgebildet. Das Stabilisierungsmittel 14 ist einstückig mit dem Filterelement 12 ausgebildet.

Das Stabilisierungsmittel 14 ist dazu vorgesehen, selektiv zumindest einen in der Flüssigkeit gelösten Stoff von der Flüssigkeit zu trennen und insbesondere aufzunehmen. Der von dem Stabilisierungsmittel 14 aus der Flüssigkeit getrennte Stoff ist ein Gerbstoff und/oder ein Phenol.

Das Stabilisierungsmittel 14 ist chemisch regenerierbar. Das Stabilisierungsmittel 14 ist mittels einer Lauge chemisch regenerierbar. Bei der Lauge handelt es sich um eine Natronlauge. Es ist jedoch auch denkbar, dass das Stabilisierungsmittel 14 mittels einer anderen Lauge und insbesondere mittels einer Säure chemisch regenerierbar ist.

Das Stabilisierungsmittel 14 ist ein Adsorptionsmittel. Das Stabilisierungsmittel 14 umfasst ein quervernetztes Polyvinylpyrrolidon. Alternativ oder zusätzlich könnte die Filtereinheit 10 jedoch auch ein Stabilisierungsmittel 14 aufweisen, welches ein Adsorptionsmittel ist, welches ein Xerogel, ein Kieselgel, ein Zeolith, ein Bentonit und/oder ein Gemisch dieser Art umfasst.

Ferner weist die Filtereinheit 10 zumindest ein weiteres integriertes Stabilisierungsmittel 16 auf. Das Stabilisierungsmittel 14 und das weitere Stabilisierungsmittel 16 sind voneinander verschieden ausgebildet. Das weitere Stabilisierungsmittel 16 ist dazu vorgesehen, selektiv zumindest einen in der Flüssigkeit gelösten Stoff von der Flüssigkeit zu trennen und insbesondere aufzunehmen. Der von dem weiteren Stabilisierungsmittel 16 aus der Flüssigkeit getrennte Stoff ist ein Protein und/oder ein Peptid.

Das weitere Stabilisierungsmittel 16 ist chemisch regenerierbar. Das weitere Stabilisierungsmittel 16 ist mittels einer Salzlösung, vorzugsweise einer Natriumchlorid-Lösung, chemisch regenerierbar.

Das Stabilisierungsmittel 14 und das weitere Stabilisierungsmittel 16 unterscheiden sich voneinander durch ein Separationsprinzip. Das weitere Stabilisierungsmittel 16 ist ein Ionentauscher. Das weitere Stabilisierungsmittel 16 ist als ein Anionentauscher ausgebildet. Es ist jedoch auch denkbar, dass das weitere Stabilisierungsmittel 16 als ein Kationentauscher ausgebildet sein kann.

Das Stabilisierungsmittel 14 und das weitere Stabilisierungsmittel 16 unterscheiden sich voneinander durch einen Stoff, insbesondere einen vierten Präkursor 22, aus denen die Stabilisierungsmittel 14, 16 ausgebildet sind. Das weitere Stabilisierungsmittel 16 umfasst eine funktionalisierte Agarose. Die Agarose ist als eine quervernetzte Agarose ausgebildet. Die Agarose bildet ferner Sepharosekügelchen aus. Zusätzlich oder alternativ könnte das weitere Stabilisierungsmittel 16 ein funktionalisiertes hydrophiles Polymer, ein funktionalisiertes Kieselgel, eine funktionalisierte Zellulose und ein funktionalisiertes Dextran umfassen. Die Agarose ist im vorliegenden Fall mittels einer Ammoniumgruppe, vorzugsweise einer quarternären Ammoniumgruppe und besonders bevorzugt Diethylaminoethyl (DEAE) funktionalisiert. Das weitere Stabilisierungsmittel 16 ist als ein Anionentauscher ausgebildet. Insbesondere kann das weitere Stabilisierungsmittel 16 vorzugsweise abhängig von einer Funktionalisierung auch als ein Kationentauscher ausgebildet sein. Zur Funktionalisierung des weiteren Stabilisierungsmittels 16 als einen Anionentauscher können insbesondere Ammoniumgruppen, insbesondere quarternäre Ammoniumgruppen, Diethylaminoethyl (DEAE), Trimethylhydroxypropyl (QA), quarternäres Aminoethyl (QAE), quarternäres Aminomethyl (Q), Triethylaminomethyl (TEAE), Triethylaminopropyl (TEAP) und Polyethylenimin (PEI) verwendet werden. Insbesondere zur Funktionalisierung des weiteren Stabilisierungsmittels 16 als einen Kationentauscher können Carboxylgruppen, Sulfatgruppen, insbesondere Sulfonat (S), Sulfoethyl (SE), Sulfopropyl (SP), Phosphatgruppen, insbesondere Orthophospat (P), Methacrylat und/oder Carboxymethyl (CM) verwendet werden.

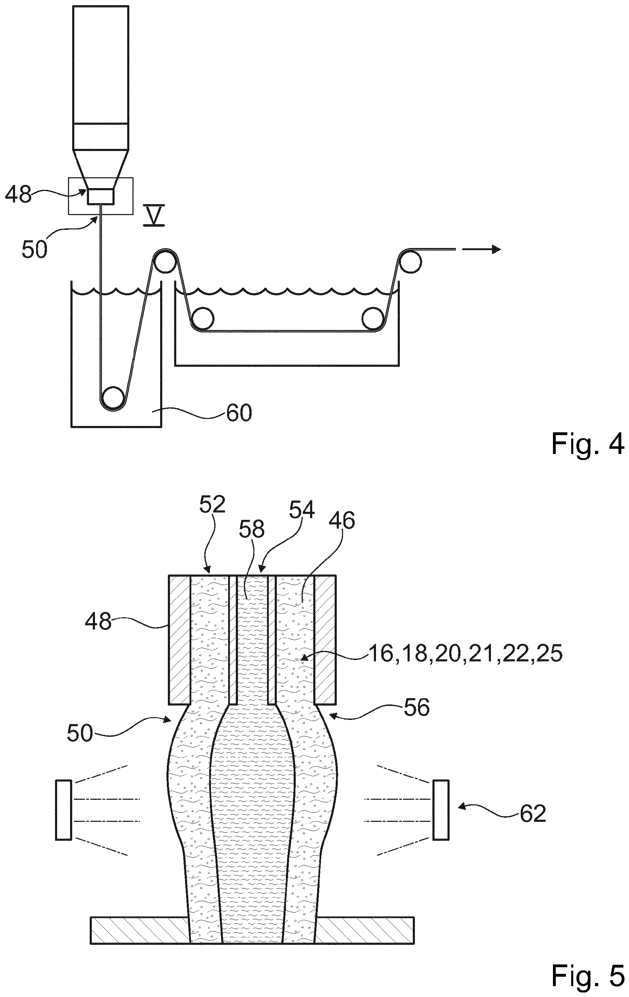

In Figur 3 ist schematisch ein Verfahren zur Herstellung der Filtervorrichtung dargestellt. In den Figuren 4 und 5 ist eine zugehörige Vorrichtung zur Herstellung der Filtervorrichtung schematisch dargestellt. In einem Verfahrensschritt 38 wird eine Polymer-Lösung 46, insbesondere eine Polymer-Suspension, hergestellt. In einem geeigneten Lösungsmittel, insbesondere Lösungsmittelgemisch wird zumindest ein Präkursor gelöst. Im vorliegenden Fall wird der erste Präkursor 18 in dem Lösungsmittel gelöst. Ferner wird der zweite Präkursor 20 in dem Lösungsmittel gelöst. Weiter wird der dritte Präkursor 21 in dem Lösungsmittel gelöst. Ferner wird das weitere Stabilisierungsmittel 16 partikulär in die Lösung gegeben und insbesondere gelöst. Es ist jedoch auch denkbar, dass ein vierter Präkursor 22, welcher dazu vorgesehen ist, das weitere Stabilisierungsmittel 16 auszubilden, in dem Lösungsmittel gelöst wird. Es wird eine Polymer-Lösung 46 ausgebildet, welche insbesondere das weitere Stabilisierungsmittel 16 partikulär aufweist.

In einem weiteren Verfahrensschritt 40 wird mittels einer Spinndüse 48 aus der Polymer-Lösung 46 ein Spinnlösungsstrahl 50 gesponnen. Die Spinndüse 48 weist zwei voneinander getrennte Kanäle 52, 54 auf. Die Kanäle 52, 54 öffnen sich gemeinsam zu einer Ausgangsöffnung 56 der Spinndüse 48. In einem äußeren Kanal 52 der Spinndüse 48 wird die Polymer-Lösung 46 gepumpt. In einem inneren Kanal 54 der Spinndüse 48 wird eine Lumenflüssigkeit 58 gepumpt. Bei der Lumenflüssigkeit 58 handelt es sich um eine Flüssigkeit in welcher die verwendeten Komponenten zur Herstellung der Filtereinheit 10 nicht lösbar sind. Im vorliegenden Fall kann beispielsweise Wasser als Lumenflüssigkeit 58 verwendet werden. Es entsteht der Spinnlösungsstrahl 50, welcher durch zumindest eine Nachbehandlung die Filtereinheit 10 ausbildet. Dabei formt die Lumenflüssigkeit 58 den Flüssigkeitskanal 38 der Filtereinheit 10 aus.

Alternativ oder zusätzlich kann die Lumenflüssigkeit 58 wasserbasierende Lösungsmittel, insbesondere organische Lösungsmittel, umfassen.Üblicherweise werden die Polymer-Lösung 48 und die Lumenflüssigkeit 58 anschließend durch Phaseninversion in einem Fällungsbad 60 voneinander getrennt und somit die Filtereinheit 10 ausgebildet. Im vorliegenden Fall wird jedoch die Filtereinheit in einem weiteren Verfahrensschritt 42 zusätzlich durch Reaktivspinnen ausgebildet. Dazu wird ein Aktivator 25 vor dem Spinnen zur Polymer-Lösung 46 hinzugegeben. Der Aktivator 25 ist dazu vorgesehen, eine radikalische Polymerisation auszulösen. Bei dem Aktivator 25 kann es sich insbesondere um einen Radikalstarter handeln, wie beispielsweise Peroxid, tert-Butylperoxypivalat. Im vorliegenden Fall handelt es sich bei dem Aktivator 25 um einen Photoaktivator, wie beispielsweise 4,4,'-Diazidostilben-2,2'-Dinatriumsulfonat. Der Photoaktivator wird durch Bestrahlung mit Licht, insbesondere UV-Licht aktiviert. Dazu kann eine Lichtquelle 62 genutzt werden, welche direkt, insbesondere mittels eines Lichtleiters, in die Spinndüse integriert ist. Im vorliegenden Fall ist die Lichtquelle 62 eine UV-Lampe. Bedingt durch die radikale Polymerisation formt der erste Präkursor 18 nicht nur das Filterelement 12 aus, sondern bildet gleichzeitig durch Quervernetzung mit dem zweiten und insbesondere dem dritten Präkursor 20, 21 das Stabilisierungsmittel 14 aus. Bei diesem Verfahren wird gleichzeitig aus demselben ersten Präkursor 18 das Stabilisierungsmittel 14 zumindest teilweise ausgebildet und das Filterelement 12 ausgeformt. Ferner wird dadurch auch zumindest teilweise die Filtereinheit 10 ausgebildet.

Denkbar ist, dass ein Lichtleiter mit einem Spitzschliff versehen sein kann, um eine Homogenität einer Bestrahlung zu verbessern. Alternativ zu einer Ausgestaltung der Lichtquelle als UV-Lampe sind Ausgestaltungen als eine LED, als eine Gasentladungslampe, insbesondere Deuteriumlampe, als eine Dampflampe, als ein Laser und/oder als eine Gasentladungslampe, insbesondere eine Leuchtstoffröhre, möglich. Vorzugsweise weist die Lichtquelle ein Strahlungsspektrum und bevorzugt ein Intensitätsmaximum des Strahlungsspektrums mit einer Wellenlänge von maximal 390 nm, vorteilhaft von maximal 315 nm, weiter vorteilhaft von maximal 280 nm, bevorzugt von maximal 200 nm und besonders bevorzugt von maximal 121 nm, und/oder insbesondere von minimal 10 nm, vorteilhaft von minimal 100 nm, weiter vorteilhaft von minimal 200 nm, bevorzugt von minimal 280 nm und besonders bevorzugt von minimal 315 nm auf.

Insbesondere für den Fall dass die Filtereinheit 10 als eine Flachmembran ausgebildet ist, kann der Spinnlösungsstrahl 50 auf ein insbesondere grobporiges Stützmaterial extrudiert werden oder auf eine Walze zur Einleitung in das Fällungsbad 60 gegeben werden.

In einem weiteren Verfahrensschritt wird die Polymer-Lösung 46 und die Lumenflüssigkeit 58 durch Phaseninversion in dem Fällungsbad 60 voneinander getrennt.

Ferner ist ein weiterer Verfahrensschritt denkbar, in welchem ein nicht quervernetzter Anteil des ersten Präkursors aus dem Filterelement 12 entfernt wird. Dazu kann das Filterelement 12 insbesondere oxidativ, vorzugsweise mittels Natriumchlorid oder Wasserstoffperoxid, gespalten und insbesondere mit Wasser ausgespült werden.

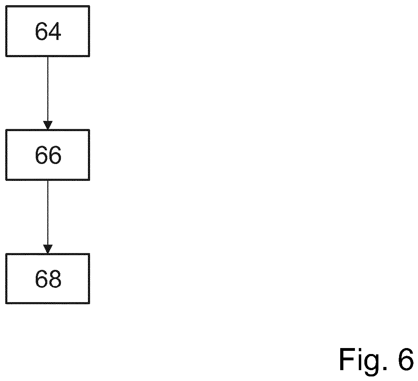

In Figur 6 ist schematisch ein Verfahrensablauf mit einer Filtervorrichtung dargestellt. Dazu wird in einem Verfahrensschritt 64 eine Flüssigkeit mittels der Stabilisierungsmittel 14, 16 der Filtereinheiten 10 stabilisiert. Verlieren die Stabilisierungsmittel 14, 16 ihre Wirkung, so müssen die Filtereinheiten 10, für den Fall, dass die Stabilisierungsmittel 14, 16 nicht regenerierbar sind gegen neue Filtereinheiten ausgetauscht werden. Im vorliegenden Fall sind die Stabilisierungsmittel 14, 16 regenerierbar. In einem weiteren Verfahrensschritt 66 werden die Filtereinheiten 10, insbesondere abhängig von den Stabilisierungsmitteln 14, 16, zu einer Regeneration in eine Salzlösung, in eine Lauge und/oder in eine Säure gegeben. In einem weiteren Verfahrensschritt können die regenerierten Stabilisierungsmittel 14, 16 wieder zu Stabilisierung der Flüssigkeit verwendet werden. Um eine kontinuierliche Stabilisierung der Flüssigkeit zu ermöglichen, wird ein Teil der Filtereinheit 10 zu einer Stabilisierung der Flüssigkeit genutzt, während gleichzeitig ein weiterer Teil der Filtereinheit 10 regeneriert wird. Dabei erfolgen die Verfahrensschritte 64, 66, 68 teilweise gleichzeitig.

## Patentansprüche

1. Verfahren zur Herstellung einer Filtervorrichtung, insbesondere zur Stabilisierung von Getränken, mit zumindest einer Filtereinheit (10), welche zumindest ein Filterelement (12) aufweist, wobei das Filterelement (12) zumindest teilweise von einem ersten und einem dritten Präkursor (18; 21) ausgeformt wird,
wobei der erste und der dritte Präkursor (18; 21) in einem Lösemittel zur Ausbildung einer Polymerlösung (46) gelöst werden;
wobei die Filtereinheit (10) mittels Reaktivspinnen als eine Hohlfaser ausgebildet wird;
wobei der erste Präkursor (18) zumindest Polyvinylpyrrolidon umfasst und ein integriertes Stabilisierungsmittel (14) der Filtereinheit (10) zumindest teilweise ausbildet, welches einstückig mit dem Filterelement (12) ausgebildet ist,
wobei die Ausbildung des Stabilisierungsmittels (14, 16) durch zumindest den ersten Präkursor (18) durch einen Aktivator (25) in Form eines Radikalstarters, der der Polymerlösung (46) vor dem Reaktivspinnen zugegeben wird, initiiert wird, wobei der erste Präkursor radikalisch quervernetzt wird und zumindest teilweise das Filterelement (12) ausbildet;
wobei der dritte Präkursor (21) Polysulfon, Polyethersulfon und/oder Polyvinylidenfluorid umfasst;
und wobei optional ein zweiter Präkursor (20) in der Polymerlösung vorgesehen ist, um zumindest teilweise ein Stabilisierungsmittel (14, 16) auszubilden.

2. Verfahren nach Anspruch 1, wobei der erste Präkursor (18) das Filterelement (12) hydrophil funktionalisiert.

3. Verfahren nach einem der Ansprüche 1 und 2, wobei der zweite Präkursor (20) zumindest Vinylacetat umfasst.

4. Verfahren nach einem der Ansprüche 1 bis 3, wobei der zweiten Präkursor (20) dazu vorgesehen ist, zumindest teilweise ein Stabilisierungsmittel (14, 16) auszubilden.

5. Verfahren nach einem der Ansprüche 1 bis 4, wobei das Stabilisierungsmittel (14, 16) ein Adsorptionsmittel ist.

6. Verfahren nach einem der Ansprüche 1 bis 5, wobei die Filtereinheit (10) zumindest ein Stabilisierungsmittel (14, 16) aufweist, das ein Ionentauscher ist.

7. Filtervorrichtung erhältlich nach einem Verfahren gemäß einem der Ansprüche 1 bis 6, wobei die Filtervorrichtung zumindest eine als eine Hohlfaser ausgebildete Filtereinheit (10) mit zumindest einem Filterelement (12) aufweist, wobei das Filterelement (12) ein integriertes Stabilisierungsmittel (14) aufweist, welches von einem ersten Präkursor zumindest teilweise und einstückig mit dem Filterelement (12) ausgebildet ist, wobei das Filterelement (12) ein weiteres integriertes Stabilisierungsmittel (16) aufweist und zumindest teilweise von einem dritten Präkursor sowie dem weiteren Stabilisierungsmittel (16) ausgebildet ist;
wobei der erste Präkursor (18) zumindest Polyvinylpyrrolidon umfasst und wobei der dritte Präkursor (21) Polysulfon, Polyethersulfon und/oder Polyvinylidenfluorid umfasst.

8. Filtervorrichtung nach Anspruch 7, wobei das Filterelement ein chemisch regenerierbares Stabilisierungsmittel (14, 16) aufweist.

9. Filtervorrichtung nach Anspruch 7 oder 8, wobei die Filtereinheit (10) zumindest teilweise von einem weiteren Stabilisierungsmittel (14, 16) und/oder einem weiteren Präkursor (22) ausgebildet wird.

10. Filtervorrichtung nach einem der Ansprüche 7 bis 9, wobei die Filtereinheit (10) zumindest ein als Adsorptionsmittel ausgebildetes Stabilisierungsmittel (14, 16) aufweist, welches zumindest ein quervernetztes Polyvinylpyrrolidon, ein Xerogel, ein Kieselgel, ein Zeolith, ein Bentonit und/oder ein Gemisch dieser Art umfasst.

11. Filtervorrichtung nach einem der Ansprüche 7 bis 10, wobei die Filtereinheit (10) ein als Ionentauscher ausgebildetes Stabilisierungsmittel (14, 16) aufweist, welches zumindest eine funktionalisierte Agarose umfasst.

12. Verfahren mit einer Filtervorrichtung, insbesondere nach einem der Ansprüche 7 bis 11, welche zu einer Stabilisierung einer Flüssigkeit, insbesondere von Getränken, vorgesehen ist, mit einer Filtereinheit (10), insbesondere einer Membranfiltereinheit, wobei die Filtereinheit (10) in einem Verfahrensschritt eine Flüssigkeit mittels zumindest eines integrierten Stabilisierungsmittels (14, 16) der Filtereinheit (10) stabilisiert und in einem weiteren Verfahrensschritt das integrierte Stabilisierungsmittel (14, 16) regeneriert wird.

## Claims

1. A method for producing a filter device, in particular for stabilizing beverages, with at least one filter unit (10) which has at least one filter element (12),
wherein the filter element (12) is at least partially formed of a first and a third precursor (18; 21),
wherein the first and third precursors (18; 21) are dissolved in a solvent to form a polymer solution (46);
wherein the filter unit (10) is formed as a hollow fibre by means of reactive spinning;
wherein the first precursor (18) comprises at least polyvinylpyrrolidone and at least partially forms an integrated stabilizing means (14) of the filter unit (10), which is formed integrally with the filter element (12),
wherein the formation of the stabilizing means (14, 16) by at least the first precursor (18) is initiated by an activator (25) in the form of a radical initiator which is added to the polymer solution (46) before reactive spinning, wherein the first precursor is radically cross-linked and at least partially forms the filter element (12);
wherein the third precursor (21) comprises polysulphone, polyethersulphone and/or polyvinylidene fluoride;
and wherein optionally a second precursor (20) is provided in the polymer solution, to at least partially form a stabilizing means (14, 16).

2. The method according to claim 1, wherein the first precursor (18) hydrophilically functionalizes the filter element (12).

3. The method according to any one of claims 1 and 2, wherein the second precursor (20) comprises at least vinyl acetate.

4. Method according to any one of claims 1 to 3, wherein the second precursor (20) is intended to at least partially form a stabilizing means (14, 16).

5. The method according to any one of claims 1 to 4, wherein the stabilizing means (14, 16) is an adsorbent.

6. The method according to any one of claims 1 to 5, wherein the filter unit (10) has at least one stabilizing means (14, 16) which is an ion exchanger.

7. A filter device, obtainable by a method according to any one of claims 1 to 6, wherein the filter device has at least one filter unit (10) configured as a hollow fibre with at least one filter element (12), wherein the filter element (12) has an integrated stabilizing means (14) which is formed from a first precursor at least partially and integrally with the filter element (12), wherein the filter element (12) has a further integrated stabilizing means (16) and is at least partially formed by a third precursor and the further stabilizing means (16);
wherein the first precursor (18) comprises at least polyvinylpyrrolidone and wherein the third precursor (21) comprises polysulfone, polyethersulphone and/or polyvinylidene fluoride.

8. The filter device according to claim 7, wherein the filter element has a chemically regenerable stabilizing means (14, 16).

9. The filter device according to claim 7 or 8, wherein the filter unit (10) is at least partially formed by a further stabilizing means (14, 16) and/or a further precursor (22).

10. The filter device according to any one of claims 7 to 9, wherein the filter unit (10) has at least one stabilizing means (14, 16), configured as an adsorbent, which comprises at least one cross-linked polyvinylpyrrolidone, a xerogel, a silica gel, a zeolite, a bentonite and/or a mixture of this type.

11. The filter device according to any one of claims 7 to 10, wherein the filter unit (10) has a stabilizing means (14, 16), configured as an ion exchanger, which comprises at least one functionalized agarose.

12. A method with a filter device, in particular according to any one of claims 7 to 11, which is used to stabilize a liquid, in particular of beverages, with a filter unit (10), in particular a membrane filter unit, wherein the filter unit (10), in one method step, stabilizes a liquid by means of at least one integrated stabilizing means (14, 16) of the filter unit (10) and, in a further method step, the integrated stabilizing means (14, 16) is regenerated.

## Revendications

1. Procédé de fabrication d'un dispositif de filtration, notamment de stabilisation de boissons, avec au moins une unité filtrante (10) qui présente au moins un élément filtrant (12), dans lequel l'élément filtrant (12) est au moins partiellement formé par un premier et un troisième précurseur (18 ; 21),
dans lequel les premier et troisième précurseurs (18 ; 21) sont dissous dans un solvant pour former une solution polymère (46) ;
dans lequel l'unité filtrante (10) est formée en tant que fibre creuse par filage réactif ;
dans lequel le premier précurseur (18) comprend au moins de la polyvinylpyrrolidone et forme au moins partiellement un agent stabilisant (14) intégré de l'unité filtrante (10) qui est formé d'une seule pièce avec l'élément filtrant (12),
dans lequel la formation de l'agent stabilisant (14, 16) est initiée par au moins le premier précurseur (18) par un activateur (25) sous forme de démarreur radical qui est ajouté à la solution polymère (46) avant le filage réactif, dans lequel le premier précurseur est réticulé radicalement et forme au moins partiellement l'élément filtrant (12) ;
dans lequel le troisième précurseur (21) comprend du polysulfone, du polyéthersulfone et/ou du fluorure de polyvinylidène ;
et dans lequel un deuxième précurseur (20) est facultativement prévu dans la solution polymère pour former au moins partiellement un agent stabilisant (14, 16).

2. Procédé selon la revendication 1, dans lequel le premier précurseur (18) fonctionnalise l'élément filtrant (12) de manière hydrophile.

3. Procédé selon l'une quelconque des revendications 1 et 2, dans lequel le deuxième précurseur (20) comprend au moins de l'acétate de vinyle.

4. Procédé selon l'une quelconque des revendications 1 à 3, dans lequel le deuxième précurseur (20) est prévu pour former au moins partiellement un agent stabilisant (14, 16).

5. Procédé selon l'une quelconque des revendications 1 à 4, dans lequel l'agent stabilisant (14, 16) est un adsorbant.

6. Procédé selon l'une quelconque des revendications 1 à 5, dans lequel l'unité filtrante (10) présente au moins un agent stabilisant (14, 16) qui est un échangeur d'ions.

7. Dispositif de filtration disponible selon un procédé selon l'une quelconque des revendications 1 à 6, dans lequel le dispositif de filtration présente au moins une unité filtrante (10) formée en fibre creuse comportant au moins un élément filtrant (12), dans lequel l'élément filtrant (12) présente un agent stabilisant (14) intégré qui est formé par un premier précurseur au moins partiellement et d'une seule pièce avec l'élément filtrant (12), dans lequel l'élément filtrant (12) présente un autre agent stabilisant (16) intégré et est formé au moins partiellement par un troisième précurseur ainsi que par l'autre agent stabilisant (16) ;
dans lequel le premier précurseur (18) comprend au moins de la polyvinylpyrrolidone et dans lequel le troisième précurseur (21) comprend du polysulfone, du polyéthersulfone et/ou du fluorure de polyvinylidène.

8. Dispositif de filtration selon la revendication 7, dans lequel l'élément filtrant présente un agent stabilisant (14, 16) chimiquement régénérable.

9. Dispositif de filtration selon la revendication 7 ou la revendication 8, dans lequel l'unité filtrante (10) est formée au moins partiellement par un autre agent stabilisant (14, 16) et/ou un autre précurseur (22).

10. Dispositif de filtration selon l'une quelconque des revendications 7 à 9, dans lequel l'unité filtrante (10) présente au moins un agent stabilisant (14, 16) formé en tant qu'adsorbant, lequel comprend au moins un polyvinylpyrrolidone réticulé, un xérogel, un gel de silice, une zéolite, une bentonite et/ou un mélange de ce type.

11. Dispositif de filtration selon l'une quelconque des revendications 7 à 10, dans lequel l'unité filtrante (10) présente un agent stabilisant (14, 16) formé en tant qu'échangeur d'ions, lequel comprend au moins une agarose fonctionnalisée.

12. Procédé avec un dispositif de filtration, en particulier selon l'une quelconque des revendications 7 à 11, qui est prévu afin de stabiliser un liquide, en particulier de boissons, avec une unité filtrante (10), en particulier une unité de filtration à membrane, dans lequel l'unité filtrante (10) stabilise un liquide au moyen d'au moins un agent stabilisant (14, 16) intégré de l'unité filtrante (10) dans une étape de procédé et régénère l'agent stabilisant (14, 16) intégré dans une autre étape de procédé.
